Europäisches Patentamt

European Patent Office

Office européen des brevets

(19)

(11) Publication number: **0 214 291 B1**

## EUROPEAN PATENT SPECIFICATION

(12)

(45) Date of publication of patent specification: **15.04.92**  (51) Int. Cl.⁵: **C04B 35/48**

(21) Application number: **85903375.5**

(22) Date of filing: **03.07.85**

(86) International application number:
**PCT/JP85/00372**

(87) International publication number:
**WO 86/05174 (12.09.86 86/20)**

(54) **SINTERED ZIRCONIA AND PROCESS FOR ITS PRODUCTION.**

(30) Priority: **07.03.85 JP 43686/86**
**07.03.85 JP 43687/85**
**07.03.85 JP 43688/85**

(43) Date of publication of application:
**18.03.87 Bulletin 87/12**

(45) Publication of the grant of the patent:
**15.04.92 Bulletin 92/16**

(84) Designated Contracting States:
**DE FR GB**

(56) References cited:
EP-A- 0 036 786     EP-A- 0 140 638
DE-A- 3 300 211     JP-A- 589 878
JP-A-58 156 578     JP-A-59 169 969
JP-A-59 174 574     US-A- 4 035 191

CHEMICAL ABSTRACTS, vol. 104, no. 24,
June 1986, page 286, abstract no. 211930g,
Columbus, Ohio, US; & JP-A-60 239 356

(73) Proprietor: **NIPPON SODA CO., LTD.**
**2-1, Ohtemachi 2-chome**
**Chiyoda-ku, Tokyo 100(JP)**

(72) Inventor: **MORISHITA, Junichi**
**316, Nakazone Odawara-shi**
**Kanagawa 250(JP)**
Inventor: **KIMURA, Nobuo**
**680, Takada Odawara-shi**
**Kanagawa 250-02(JP)**
Inventor: **OKAMURA, Hiromichi**
**3-14-13, Ohogimachi Odawara-shi**
**Kanagawa 250(JP)**

(74) Representative: **van der Beek, George Frans,**
**Ir. et al**
**Nederlandsch Octrooibureau Schevening-**
**seweg 82 P.O. Box 29720**
**NL-2502 LS 's-Gravenhage(NL)**

CHEMICAL ABSTRACTS, vol. 102, no. 4, January 1985, page 388, abstract no. 30788e, Columbus, Ohio, US; & JP-A-59 164 673

TRANSACTIONS AND JOURNAL OF THE BRITISH CERAMIC SOCIETY, vol. 82, no. 6, November-December 1983, pages 200-205, Stoke-on-Trent, GB; S. WU et al.: "Sintering additives for zirconia ceramics"

CHEMICAL ABSTRACTS, vol. 84, no. 22, May 1976, page 284, abstract no. 154668v, Columbus, Ohio, US; & JP-A-75 103 510

CHEMICAL ABSTRACTS, vol. 103, no. 6, August 1985, page 269, abstract no. 41433g, Columbus, Ohio, US; & JP-A-75 103 510

## Description

### Technical field

The present invention relates to sintered zirconia bodies including fully stabilized zirconia, partially-stabilized zirconia and partially stabilized zirconia containing alumina.

More particularly, it relates to a process for the production of sinterable raw material powder to be used for the production of sintered zirconia bodies as well as a method for the production of high density sintered zirconia bodies which comprises moulding the above raw particulate material into a certain shape, and, then burning to sinter, and further sintered bodies of zirconia partially stabilized with $Y_2O_3$ of a novel composition as well as sintered bodies of partially stabilized zirconia containing alumina.

### Background Art

There have been known as sintered zirconia bodies, two species, i.e. fully stabilized zirconia ceramics wherein all crystal phase of $ZrO_2$ constituting the ceramics is cubic phase, and the cubic phase has been stabilized to be kept stable even at the lower temperature range, and partially stabilized sintered zirconia bodies wherein a crystal phase of $ZrO_2$ constituting the sintered body is a tetragonal phase, and the tetragonal phase has been stabilized to be kept stable even at the lower temperature range.

As a method for stabilizing the crystal phase of $ZrO_2$ consitituing the sintered body, there has been widely used the process which comprises adding a stabilizer such as CaO, MgO, $Y_2O_3$, and/or $CeO_2$ to the raw material powder or the sintered body in order to stabilize the crystal phase of $ZrO_2$ in the sintered body.

Particularly, $Y_2O_3$ is widely utilized as a stabilizing agent for the production of sintered bodies partially stabilized zirconia having high strength because sintered bodies having excellent stability and good mechanical properties are obtained.

The fully stabilized zirconia ceramics have been used as a solid electrolytic media, or as a heat resistant material for a furnace etc., because of its excellent thermal stability.

On the other hand the partially stabilized sintered zirconia body has been called a phase transformation toughening type zirconia, wherein it is considered that if an external mechanical stress is applied to the sintered body, the tetragonal phase of $ZrO_2$ constituting the sintered body will transform martensite-like into a monoclinic phase what is the stable phase at the lower temperature range, consequently the sintered body may have high tenacity because that the fracture energy is absorbed by said phase transformation.

Accordingly, it is known that the sintered body of partially stabilized zirconia is a functional sintered body having high strength and high tenacity, and it is expected to be suited for use as a structural material such as a mechanical material, an abrasion resistant material, and a cutting material and etc.

It is necessary to produce the dense sintered body having high density and controlled microstructure by suppressing the grain growth in the sintered body in order to have objective functions, for example, in the fully stabilized zirconia ceramics, oxygen ion conductivity, thermal stability, mechanical properties and the like, and in the partially stabilized zirconia ceramics has such objective functions as mechanical properties such as bending strength, tenacity and the like.

There has been produced a dense sintered zirconia body having controlled microstructure by a special moulding technique, and a high pressure sintering technique such as hot press technique or HIP method. However, these methods need complicated operation and special installations, and therefore, the resultant product will be expensive.

On the other hand, there has been proposed a process for the production of a sintered body which comprises preparing the raw material powder by using chemical technique such as co-precipitation or the like and then sintering a moulding of the obtained raw material powder in a relative low temperature range.

However, it is known that in general the more finely divided particulate material has the stronger cohesive force. Therefore, it is difficult to produce sintered bodies having high densities with high reproducibility from the chemically-treated raw powder.

Further, the addition of a sintering activator has been JP-A-5010351 produced, for example, JP-A-5010357 describes a process for the production of sintered bodies comprising moulding and sintering a raw material powder which is obtained by adding aqueous ammonium to the mixed aqueous solution containing water soluble zirconium salt, water soluble salts of calcium, magnesium, yttrium and the like as (a) stabilizing agent(s), and water soluble salt of the transition metal for sintering acitivator, so as to precipitate the desired co-precipitated hydroxide containing the desired metals, then dyring and calcining thereof. The raw material powder can not provide satisfactory lower temperature sintering characteristics nor a satisfactory relative density of the sintered body.

In the above mentioned process, aqueous ammonium is used for precipitation. Some salts of transition metals will form an ammine complex with ammonium so that in practice aqueous ammonium can not be used in cases of such transition metal compounds.

In order to avoid this shortcoming, there is a process in that the oxides of the transition metals are used in place of the water soluble salt of the transition metals so as to disperse in the mixed solution containing the other components whereas the hydroxides of the other metal components are co-precipitated together with oxides of the transition metals.

However, in this process, the surface of the oxide of the transition metal is coated with the hydroxides of the other components. Therefore, it is difficult to impart satisfactory effect for sintering activator by the addition of a small amount of the transition metal oxide in the sintered body.

It was reported to that the content of $Y_2O_3$ in the sintered body can be decreased to 2.0 mol.% in $Y_2O_3$ in a sintered body of partially stabilized zirconia so that a fracture toughness (KIc) of approximately 10 $MN/m^{3/2}$ can be obtained for the sintered body having high tenacity.

This means, that a sintered body of partially stabilized zirconia containing $Y_2O_3$ in an amount ranging nearly to 2 mol.% can exhibit a relative high tenacity and strength.

F.F. Lange reported in Journal of Materials Science 17, 240-246 (1982) that "There is critical limit of the particle size of tetragonal phase respectively to $Y_3O_3$ content, and when the size exceeds the critical limit, the tetragonal phase can not be present. Though the critical partical size is more than 1 $\mu$m at the $Y_2P_3$ content of 3 mol.% , it decreases to in order of 0.2 $\mu$m at the content of 2 molar %."

As described before, the reduction of $Y_2O_3$ content in the sintered body of zirconia partially stabilized with $Y_2O_3$, is important in view of the high tenacity of the sintered body and can be attained by suppressing the growth of crystal grains in said sintered body.

However, the suppression of the growth of crystal grains in the sintered body to control the size of the crystal grains to be in the order of equal to or less than 0.2 $\mu$m is extremely difficult in the prior art process for the production of the sintered body.

The characteristics of sintering at the lower temperature such that the grain size can be controlled approximately at 0.2 $\mu$m or less cannot be attained even by using the raw material powder prepared by the co-precipitation. Therefore, the $Y_2O_3$ content in the sintered body of zirconia partially stabilized with $Y_2O_3$ has the lower limit at about 2 mol.%. A sintered body of zirconia partially stabilized with $Y_2O_3$ having a $Y_2O_3$ content of less than 2 mol.% and a high strength is not known.

Zirconia partially stabilized with approximately 2 mol.% $Y_2O_3$ has the problem of heat deterioration and therefore, the prior art zirconia partially stabilized with $Y_2Oxz3$ has ordinarily a $Y_2O_3$ content in the range of about 3 mol.%.

As described above, the mechanical strength and stability of the known partially stabilized zirconia is not satisfactory and therefore a sintered body with higher tenacity and strength has been highly desired.

JP-A-6086073 discloses a method to improve the mechanical properties of a sintered body of partially stabilized zirconia by adding alumina in the composition of the sintered body.

However, the production of such known sintered bodies of partially stabilized zirconia alumina requires the use of special sintering techniques such as HIP process, and therefore, the produced sintered body will be extremely expensive as mentioned before.

Further earlier EP-A-0 140 638 describes a zirconia type sintered body consisting essentially of 50 to 98% by weight of zirconia ($ZrO_2$) containing 1.5 to 5 mole % of yttria ($Y_2O_3$) and 50 to 2 % by weight of alumina ($AlO_3$), spinel ($MgAl_2O_4$) or mullite ($3Al_2O3_.2SiO_2$), said sintered body having a three-point bending strength of at least 1700 MPa. The purpose of this patent application is to provide a zirconia type sintered body having highly proved mechanical strength characteristics.

The preference within the disclosure of EP-A-0 140 638 does not teach the range of 0.0001 to 0.01 for the ratio of the transition metal excluding Zr to Zr or Zr plus Al in the sinterable raw material.

It is the object of the present invention to provide a process for the production of the raw material powder with characteristics of sintering at a lower temperature, which can be used for the production of the dense sintered zirconia body as well as a process for the production of the dense zirconia sintered body with controlled crystal structure.

It is another object of the invention to provide a sintered body of zirconia partially stabilized with $Y_2O_3$ and a high fracture tenacity, having a novel composition as well as a method for the production of the same.

It is a further object of the present invention to provide a sintered body of partially stabilized zirconia containing alumina as well as a process for the production of the same.

Disclosure of the invention

The present invention comprises a process for the production of a sinterable raw material powder suited for use in the production of a sintered body of fully or of partially stabilized zirconia or of fully or partially stabilized zirconia containing 1 to 16 mole % of $\alpha$-alumina wherein the content of tetragonal phase is 65% or more, produced by:

(a) adding a powder containing zirconium compound(s) and containing stabilizing agent(s) to a solution or slurry containing at least one kind of transition metal compound(s) excluding zirconium compound to be suspended therein, wherein the powder containing zirconium compound(s) and containing stabilizing agent(s) is one selected from the group consisting of fully or partially stabilized zirconia powder, fully or partially stabilized zirconia containing alumina powder and a precursor powder which can produce fully or partially stabilized zirconia or alumina-containing fully or partially stabilized zirconia powder by thermal decomposition: the stabilizing agent is one selected from the group consisting of $Y_2O_3$, CaO, MgO, $CeO_2$ and yttrium compounds, calcium compounds, magnesium compounds or cerium compounds which can produce $Y_2O_3$, CaO, MgO or $CeO_2$, respectively, by thermal decomposition, the transition metal compound(s) are compound(s) of at least one kind of transition metal selected from the group consisting of Mn, Fe, Co, Ni, Cu and Zn; and the atomic ratio of the transition metal excluding Zr to Zr or to Zr plus Al in said sinterable raw material is in the range of 0.0001 to 0.01;

(b) subsequently removing the solvent from the suspended slurry; and

(c) drying the residue to obtain the objective product.

The invention further comprises a process for the production of a sintered body wherein a fully or partially stabilized zirconia sintered body or a fully or partially stabilized zirconia sintered body containing 1 to 16 mol % of $\alpha$-alumina wherein the content of tetragonal phase is 65 % or more, is produced by:

(a) adding a powder containing zirconium compound(s) and containing stabilizing agent(s) to a solution or slurry containing at least one kind of transition metal compound(s) excluding zirconium compound to be suspended therein, wherein the powder containing zirconium compound(s) and containing stabilizing agent(s) is one selected from the group consisting of partially stabilized zirconia powder, partially stabilized zirconia powder containing $\alpha$-alumina and a precursor powder which can produce fully or partially stabilized zirconia or fully or partially stabilized zirconia powder containing $\alpha$-alumina by thermal decomposition: the stabilizing agent is one selected from the group consisting of $Y_2O_3$, CaO, MgO, $CeO_2$ and yttrium compounds, calcium compounds, magnesium compounds or cerium compounds which can produce $Y_2O_3$, CaO, MgO, $CeO_2$ respectively, by thermal decomposition, the transition metal compound(s) are compound(s) of at least one kind of transition metal selected from the group consisting of Mn, Fe, Co, Ni, Cu and Zn; and the atomic ratio of the transition metal excluding Zr to Zr or to Zr plus Al in said sinterable raw material is in the range of 0.0001 to 0.01;

(b) subsequently removing the solvent from the suspended slurry;

(c) drying the residue to produce raw material powder; and

(d) moulding and sintering the raw material powder.

The sintered body of zirconia of the invention is characterized by an $Y_2O_3$ content in the range of 1.3 mole % to 2.0 mole %, a content of tetragonal phase of 65% or more, a grain size of $ZrO_2$ in the sintered body of 0.5 $\mu$m or less, a sintered density of 5.8 $g/cm^3$ or more and an atomic ratio of the transition metal excluding Zr to Zr or Zr plus Al of 0.0001 to 0.001.

Transition metal compounds, that can be used are inorganic compounds such as oxides, hydroxides, nitrates, chlorides and the like of the above mentioned transition metals; organic acid salts such as oxalates, acetates, propionates, higher fatty acid salt and the like of the above mentioned transition metals; and organic metal compounds such as alkoxide compounds, chelate compounds and the like of the metals, even if it is not only soluble but also insoluble in the solvents used. Solvent soluble compounds are preferred.

As a powder containing zirconium compounds, a powder containing the stabilizing agents can be used, which is obtained by a conventional process such as the oxide method, co-precipitation method, hydrolysis method, pyrolysis method and the like.

It is particularly, preferred to use a precursor powder which is obtained by drying the co-precipitated hydroxides or mixed carbonates prepared by adding as a precipitating agent, aqueous ammonium or ammonium carbonate to the mixed solution containing water soluble zirconium compounds, and water soluble yttrium compounds, water soluble magnesium compounds, water soluble calcium compounds, or water soluble cerium compounds, and if desired, alumina powder, or water soluble aluminium compounds.

The solvent used for dissolving or suspending the transition metal compound may be water and/or an organic solvent. An organic solvent is preferred because of convenient removal of the solvent by evaporation and because of less evaporation energy at drying.

The scope of the usable organic solvent is not limited, but the use of the highly viscous solvents is unpreferable because it is difficult to prepare a homogeneous suspension of the powder principally containing zirconium compounds and containing the transition metal compounds and further, the removal and evaporation of the solvent is difficult. Preferably, lower alcohols such as methanol, ethanol, propanol, buthanol and the like are used.

The removal of solvent(s) and drying are carried out by the conventional evaporation method, but when the transition metal compound is insoluble into water or organic solvent(s), or when the precipitation has been already obtained by applying a precipitation agent to the solution containing the soluble transition metal compounds, solvent can be removed by filtration. Further, spray drying can be used to treat efficiently and effectively of the material powder on a large scale.

The resultant raw material powder can be used for the production of a sintered body as it is, however, it can also be calcined at a temperature in the range from 300 to 1200°C for further treatment.

In the raw material powder obtained by the above mentioned process, the transition metal compounds are uniformly adhering and/or coating on the surface of the raw material powder, so that it functions effectively as a sintering activator.

The raw material powder will produce a dense sintered body by the easy method of sintering through firing under atmospheric pressure at a relative low temperature in the range from 1100 to 1500°C.

The atomic ratio of transition metal excluding Zr to Zr, or the combination of Zr plus Al in case the raw material powder contains alumina is preferably 0.0001-0.005.

When the atomic ratio of the transition metal is less than 0.0001, the effect for activating the sintering process is insufficient. Further, when it is above 0.01, the properties of the resultant sintered body will be affected and thus the range of more than 0.01 should be avoided.

In accordance with the present invention, the sintered body of partially stabilized zirconia is produced by moulding the raw material powder obtained by above process, and then by sintering the moulded body.

The moulding may be a press moulding by using the conventional moulding technique, but it is prefered to apply further a hydrostatic compressing after lower pressure moulding, so as to improve the sintered density and the mechanical strength of the finished sintered body.

The sinter method may be any of the known methods, and by the atmospheric sintering under the atmospheric pressure, the object of the sintering is sufficiently obtained.

Generally the sintering temperature can be in the range of from 1100 to 1700°C.

In order to control the grain growth in the sintered body for the production of a dense sintered body, particularly high strength sintered body of partially stabilized zirconia, the lower sintering temperature is better, and therefore, the range of 1200 to 1500°C is preferred.

In accordance with such a method, since the raw material powder has good sintering characteristics, the use of the atmospheric firing at the lower temperture can produce easily a dense sintered body having a density of more than 99% of the theoretical density.

In accordance with the present invention, a sintered body of zirconia partially stabilized with $Y_2O_3$ having a tetragonal phase content of 65% or more and high tenacity and high strength can be obtained by limiting the raw material powder to powder of zirconia partially stabilized with $Y_2O_3$ or precursor powder of zirconia partially stabilized with $Y_2O_3$ produced by its thermal decomposition, in which said powder has crystal particle size of 400 Å or less and a BET specific surface area of 2 $m^2/g$ or more.

When in the production of the sintered body, when the crystal particle size of the powder principally containing zirconia compounds exceeds 400 Å, or when the BET specific surface area is less than 2 $m^2/g$, the sinter activating effect by the transition metal compound(s) is insufficient and then sintered bodies with a sufficient density can not be obtained by the atmospheric sintering at the lower temperature.

The atomic ratio of the transition metal to Zr in the production of the sintered body can be in the range of from 0.0001 to 0.01, preferably 0.0001 to 0.005.

The sintering temperature is preferably not above 1400°C.

A partially stabilized sintered body of zirconia having a $Y_2O_3$ content of 1.3 mol.% or more, and less than 2.0 mol.% and having a tetragonal phase content of 65% or more can be produced in accordance with the present invention, by the above mentioned process for the production of the sintered body.

The $Y_2O_3$ content is calculated on the total combination of $Y_2O_3$ plus $ZrO_2$ in the sintered body.

The obtained sintered body has a sintered density of at least 5.8 $g/cm^3$, preferably more than 5.9 $g/cm^3$, and more preferably 6.0 $g/cm^3$ or more, and a fracture tenacity value (KIc) in the range of from 10 $MN/m^{3/2}$ and thus has a high density, high tenacity and a high strength.

The grain size in the sintered body can be 0.5 $\mu$m or less, preferably 0.3 $\mu$m or less and the content of the tetragonal phase in the sintered body is 65% or more, preferably 80% or more.

When the $Y_2O_3$ content is less than 1.3%, the content of the monoclinic phase will increase and the tetragonal phase content of 65% or more is difficult to be maintained. On the other hand, a sintered body

having a $Y_2O_3$ content of 2.0 mol.% or more, was already known, and the fracture tenacity value thereof can not be more than 10 MN/m$^{3/2}$.

When the size of the grain in the sintered body exceeds 0.5 $\mu$m, it is extremely difficult to keep the content of the tetragonal phase at 65% or more. Further a grain size of 0.3 $\mu$m or less will result in an improved stability of the sintered body under heat stress as well as in a stable mechanical strength of the sintered body.

Further, when the sintering temperature exceeds 1400°C, the grain growth in the sintered body will be activated, and the grain size becomes more than 0.5 $\mu$m, and then, only the sintered body having a relatively higher content of the monoclinic phase will be produced, and further firing can result in cruck formation.

The atomic ratio of the transition metal to Zr in the raw particulate material powder may range from 0.01 to 1.0%. When the atomic ratio exceeds 1.0%, the characteristics of the sintered body will be undesirably affected.

In accordance with the present invention, the novel sintered body of zirconia partially stabilized with alumina comprises 99 to 40 mol.% of partially stabilized zirconia and 1 to 60 mol.% of alpha-alumina and transition metal oxide having the atomic ratio thereof to the combination of Zr plus Al ranging 0.0001 to 0.01 can be produced.

The resultant sintered body has so high tenacity and high hardness, in that the fracture tenacity is of 18.5 Mn/m$^{3/2}$, and the Vickers hardness reaches to 1600 kg/mm$^3$, as well as excellent heat shock resistance.

The sintered body may be zirconia partially stabilized with $Y_2O_3$ having an $Y_2O_3$ content in the range of from 1.3 to 4 mol.% or zirconia partially stabilized with $Y_2O_3$, wherein a part or all of $Y_2O_3$ for stabilizer is substituted by CaO, MgO, or $CeO_2$, which content is 0.01 to 12 mol.%.

The content of the stabilizing agent such as $Y_2O_3$ is based on the total amount of $ZrO_2$ and the presumed oxide for the stabilizing agent.

In case of zirconia partially stabilized with $Y_2O_3$ when the $Y_2O_23$ content is less than 1.3 mol.%, the ratio of the monoclinic phase in the sintered body will increase even in the presence of $Al_2O_3$, and then it is difficult to maintain the ratio of tetragonal phase of 65% or more. When the $Y_2O_3$ content exceeds 4 mol.%, the fracture tenacity value of the sintered body will decrease.

When the $Al_2O_3$ content in the sintered body is less than 1 mol.% a sufficient hardness can not be obtained. Further, when the $Al_2O_3$ content is more than 60 mol.% it is difficult to produce a sufficient dense sintered body.

When the atomic ratio of the transition metal to the combination of Zr plus Al in the sintered body is less than 0.0001, a sintered body with high density can not be obtained. Further, when such atomic ratio is more than 0.01, the sintering characteristics of the sintered body will be degraded.

The grain size of partially stabilized zirconia in the sintered body may be 2 $\mu$m or less, and preferably 0.5 $\mu$m or less. The content of the tetragonal phase in the sintered body may be 65% ormore, and preferably 80% or more. The grain size of $Al_2O_3$ in the sintered body may be 4 $\mu$m or less and preferably 2 $\mu$m or less.

The resultant sintered body of partially stabilized zirconia containing alumina has an extremely high hardness such as a Vickers hardness in the range of from 1100 to 1600 Kg/mm$^3$, and is particularly excellent in heat resistance such as having a bending strength of 85 Kg/mm$^2$ or more, even after heat treatment at 200°C.

In the production of the raw material powder, the powder principally containing zirconium compounds may be; the mixture of partially stabilized zirconia powder having a crystal particle size of 400 Å or less and a BET specific surface area of 2 m$^2$/g or more: or the precursor powder to generate partially stabilized zirconia by its thermal decomposition, and: alpha-alumina powder having a crystal particle size of 1.0 $\mu$m or less and a BET specific surface area of 2 m$^2$/g or more, or the precursor powder to generate alumina by its thermal decomposition.

When partially stabilized zirconia powder or the precursor powder has a crystal particle size of more than 400 Å, or when the BET specific surface area thereof is less than 2 m$^2$/g, the sinter activating effect by the transition metal will be decreased so that the atmospheric sintering at less than 1500°C can not produce sufficient dense ceramics.

Best mode for Carrying out the Invention

The best mode for carrying out the invention may be illustrated by the following examples. However, the following examples are not given for limitation of the scope of the invention.

Example 1 : Production of Sinterable Raw Material Powder and a Sintered Body.

(1) Production of Raw Material Powder suited for use in the production of sintered bodies.

Sample (1-1)

Aqueous ammonia was added to the combined solution containing $ZrOCl_2$, and $YCl_3$ in the ratio of $Y_2O_3(y_2O_3 + ZrO_2) = 0.03$ by oxide molar base calculation, in order to cause co-precipitation of the combined hydroxides. The resultant co-precipitated hydroxides were filtered and dried, and then the precursor powder of zirconia partially stabilized with $Y_2O_3$ was obtained. By calcining a part of the obtained precursor powder at 800°C for one hour, a powdery zirconia partially stabilized with $Y_2O_3$ was obtained. For the transition metal compounds, the following compounds were dissolved or dispersed in ethanol to prepare solution respectively slurry of the transition metal compounds.

| Solution | Slurry |
|---|---|
| Mn:$Mn(CH_3COO)_2.4H_2O$ | $MnO_2$ |
| Fe:$Fe(NO_3)_3.9H_2O$ | $Fe(OH)_3$ |
| Co:$Co(CH_3COO)_2.4H_2O$ | $CoO$ |
| Ni:$Ni(NO_3)_26H_2O$ | $Ni(OH)_2$ |
| Cu:$Cu(CH_3COO)_2$ | $CuO$ |
| Zn:$Zn(CH_3COO)_2.2H_2O$ | $ZnO$ |

The partially stabilized zirconia powder prepared as described above was added to the prepared solution or slurry of the transition metal compounds to form the suspension. Then, ethanol was distilled off and the product was dried to obtain raw material powder (1-1) adhering the transition metal compounds which are in use for the production of a sintered body of zirconia partially stabilized with $Y_2O_3$.

Sample (1-2)

In accordance with the same conditions for the productoin of sample (1-1) except for using precursor powder zirconia partially stabilized with $Y_2O_3$ in place of the powder of zirconia partially stabilized with $Y_2O_3$, the resultant material was prepared and then, the resultant material was coalcined at 800°c for one hour, yielding zirconia partially stabilized with $Y_2O_3$ raw material powder (1-2) suited for the production of the zirconia sintered body.

Sample (1-3)

The pH of the mixed solution containing $ZrOCl_2$ and $CaCl_2$ in the ratio of $CaO/(CaO + ZrO_2) = 0.12$ by oxide molar calculation for the oxides was adjusted by adding aqueous ammonia to co-precipitate mixed hydroxides. The co-precipitated mixed hydroxides were filtered, dried and then calcined at 800°C for one hour to obtain zirconia powder partially stabilized with CaO.
The prepared zirconia powder partially stabilized with CaO was treated under the same conditions as sample (1-1) with the transition metal compounds, yielding zirconia partially stabilized with CaO raw particulate material (1-3) suited for the production of the zirconia sintered body.

Sample (1-4)

The pH of the mixed solution containing $ZrOCl_2$ and $MgCl_2$ in the ratio of $MgO/(MgO + ZrO_2) = 0.081$ by molar calculation for the oxides was adjusted by adding aqueous ammonia to co-precipitate mixed hydroxides. The co-precipitated mixed hydroxides were filtered, dried and then calcined at 800°C for one hour to obtain zirconia powder partially stabilized with MgO.
The prepared zirconia powder partially stabilized with MgO was treated under the same condition as Sample (1-1) with the transition metal compound, yielding zirconia partially stabilized with MgO raw material powder (1-4) suited for use in the production of the zirconia sintered body.

Sample (1-5)

The mixed solution containing $ZrOCl_2$ and $CeCl_4$ in the ratio of $CeO_2/(CeO_2 + ZrO_2) = 0.08$ by oxide molar calculation for the oxides was adjusted by adding aqueous ammonia to precipitate mixed hydroxides. The precipitated mixed hydroxides were filtered, dried and then calcined at 800°C for one hour to obtain zirconia powder partially stabilized with $CeO_2$.

The prepared zirconia powder partially stabilized with $CeO_2$ was treated under the same conditions as sample (1-1) with the transition metal compound, yielding zirconia partially stabilized with $CeO_2$ raw particulate material (1-5) in use for the production of the zironica sintered body.

Reference Sample (C1-1)

The transition metal compound was added to the starting mixed aqueous solution used for the production of the precursor powder as in Sample (1-1), and treated to precipitate mixed hydroxides containing the transition metal compound and then the precipitated mixed hydroxides were filtered, and dried, obtaining the raw particulate material (C1-1) for reference.

Reference Sample (C1-2)

The treatment for preparation of Sample (1-1) but omitting the deposition of the transition metal compound was carried out to prepare zirconia partially stabilized with $Y_2O_3$ which was referred as the raw material powder (C1-2) for reference (hereinafter refer to "untreated powder").

Reference Sample (C1-3)

"Untreated powder" of zirconia fully stabilized with CaO produced by the process for production of Sample (1-3) was used as the raw powder (C1-3) for reference.

Reference Sample (C1-4)

"Untreated powder" of zirconia powder partially stabilized with MgO prepared by omitting the deposition of the transition metal compound from the preparation process for Sample (1-4) was used as the raw powder (C1-4) for reference.

Reference Sample (C1-5)

"Untreated powder" of zirconia powder partially stabilized with $CeO_2$ prepared by omitting the deposition of the transition metal compound from the preparation method of Sample (1-5) was used as the raw powder (C1-5) for reference.

(2) Production of a sintered body.

By pressure moulding the raw material powder as before obtained under a pressure of 200 Kg/cm$^2$ using a mould, and then further hydrostatic compressing the obtained mouldings under a pressure of 2 ton/cm$^2$, mouldings having the desired shape were obtained. The obtained mouldings were fired under atmospheric pressure at the given temperature for three hours, producing a sintered zirconia body.

(4) Evaluation Test

The density of the resultant sintered body was measured and the three point bending test of the portion thereof based on JIS (Japan Industrial Standard) R 1601 (1981) was carried out.

The Table 1 indicates the results of the following tests; on raw material powder; Samples (1-1), 1-2) and reference Samples (C1-1)-(C1-2), in atomic ratio of the transition metal to Zr, the density and relative density to the theoretical density of the resultant sintered body of zirconia partially stabilized with $Y_2O_3$ produced from each raw material and bending strength (average from 5 points) of the resultant sintered body.

Table 2 indicates the results of the tests on raw material powder; Samples (1-3), (1-4), (1-5) and reference Samples (C1-3) to (C1-5), in atomic ratio of the transition metal to Zr, the density and relative density to the theoretical density of the resultant sintered body of zirconia partially stabilized with $Y_2O_3$ produced from each raw material and bending strength (average from 5 points) of the resultant sintered body.

The theoretical density of each sintered body is as follows; Sintered body of zirconia partially stabilized with $Y_2O_3$     6.10 g/cm$^3$. Sintered body of zirconia fully stabilized with CaO     5.68 g/cm$^3$. Sintered body of zirconia partially stabilized with MgO     5.80 g/cm$^3$. Sintered body of zirconia partially stabilized with CaO$_2$.     6.23 g/cm$^3$.

In the following tables, (A) means that the transition metal compound(s) was adhered by the solution method, and (B) means that the transition metal compound(s) was (were) adhered by the slurry method.

Table 1

| raw material | | | 1200°C firing | | | 1300°C firing | | |
|---|---|---|---|---|---|---|---|---|
| | transition metal | | sintered density g/cm$^3$ | relative density % | bend strength kg/mm$^2$ | sintered density g/cm$^3$ | relative density % | bend strength kg/mm$^2$ |
| | adhere method | adhered atom ratio | | | | | | |
| 1-2 | Mn (A) | 0.003 | 5.90 | 96.7 | ---- | 5.98 | 98.0 | ---- |
| 1-1 | Mn (A) | 0.0005 | 5.90 | 96.7 | ---- | 6.00 | 98.4 | ---- |
| | Mn (A) | 0.001 | 5.95 | 97.5 | ---- | 6.01 | 98.5 | ---- |
| | Mn (A) | 0.002 | 5.97 | 97.9 | ---- | 6.02 | 98.7 | ---- |
| | Mn (A) | 0.003 | 5.96 | 97.6 | ---- | 6.02 | 98.7 | 100 |
| | Mn (A) | 0.01 | 5.94 | 97.4 | ---- | 6.02 | 98.7 | ---- |
| | Mn (B) | 0.0005 | 5.82 | 95.4 | ---- | 5.93 | 97.2 | ---- |
| | Mn (B) | 0.001 | 5.88 | 96.7 | ---- | 5.97 | 97.9 | ---- |
| | Mn (B) | 0.002 | 5.90 | 96.7 | ---- | 5.99 | 98.2 | ---- |
| | Mn (B) | 0.003 | 5.91 | 96.9 | 95 | 6.00 | 98.4 | 100 |
| | Mn (B) | 0.01 | 5.90 | 96.7 | ---- | 6.00 | 98.4 | ---- |
| | Fe (A) | 0.0005 | 5.72 | 93.9 | ---- | 5.92 | 97.0 | ---- |
| | Fe (A) | 0.001 | 5.73 | 93.9 | ---- | 5.94 | 97.4 | ---- |
| | Fe (A) | 0.002 | 5.84 | 95.7 | ---- | 6.02 | 98.7 | ---- |
| | Fe (A) | 0.003 | 5.84 | 95.7 | ---- | 6.03 | 98.9 | 101 |
| | Fe (B) | 0.003 | 5.80 | 95.1 | 84 | 5.98 | 98.0 | 98 |
| | Co (A) | 0.0005 | 5.89 | 96.6 | ---- | 5.99 | 98.2 | ---- |
| | Co (A) | 0.001 | 5.95 | 97.5 | ---- | 6.00 | 98.4 | ---- |
| | Co (A) | 0.002 | 5.89 | 96.6 | ---- | 6.02 | 98.7 | ---- |
| | Co (A) | 0.003 | 5.87 | 96.2 | ---- | 6.02 | 98.7 | 100 |
| | Co (B) | 0.003 | 5.84 | 95.7 | 88 | 5.98 | 98.0 | 90 |

(to be cont'd)

| raw material | | 1200°C firing | | | 1300°C firing | | |
|---|---|---|---|---|---|---|---|
| | transition metal | sintered | relative | bend | sintered | relative | bend |
| | adhere adhered | density | density | strength | density | density | strength |
| | method atom ratio | g/cm³ | % | kg/mm² | g/cm³ | % | kg/mm² |
| 1-1 | Ni (A) 0.0005 | 5.89 | 96.6 | 90 | 5.99 | 98.2 | 90 |
| | Ni (A) 0.001 | 5.92 | 97.0 | 90 | 5.99 | 98.2 | 95 |
| | Ni (A) 0.002 | 5.99 | 98.2 | 93 | 6.02 | 98.7 | 98 |
| | Ni (A) 0.003 | 6.02 | 98.7 | 96 | 6.07 | 99.5 | 110 |
| | Ni (A) 0.01 | 6.01 | 98.5 | 86 | 6.07 | 99.5 | 90 |
| | Ni (B) 0.003 | 5.94 | 97.4 | 90 | 5.98 | 98.0 | 98 |
| 1-2 | Zn (A) 0.003 | 5.90 | 96.7 | 85 | 6.02 | 98.7 | 100 |
| 1-1 | Zn (A) 0.0005 | 5.88 | 96.4 | 80 | 6.05 | 99.2 | 105 |
| | Zn (A) 0.001 | 5.90 | 96.7 | 80 | 6.07 | 99.5 | 113 |
| | Zn (A) 0.002 | 5.99 | 98.2 | 90 | 6.08 | 99.7 | 115 |
| | Zn (A) 0.003 | 5.99 | 98.2 | 90 | 6.07 | 99.5 | 115 |
| | Zn (A) 0.01 | 5.98 | 98.0 | 74 | 6.07 | 99.5 | 90 |
| | Zn (B) 0.003 | 5.94 | 97.4 | 87 | 6.01 | 98.5 | 100 |
| 1-2 | Cu (A) 0.003 | 6.01 | 98.5 | 88 | 6.03 | 98.9 | 99 |
| 1-1 | Cu (A) 0.0005 | 5.96 | 97.7 | 92 | 6.05 | 99.2 | 108 |
| | Cu (A) 0.001 | 5.99 | 98.2 | 95 | 6.07 | 99.5 | 115 |
| | Cu (A) 0.002 | 6.02 | 98.7 | 99 | 6.09 | 99.8 | 120 |
| | Cu (A) 0.003 | 6.05 | 99.2 | 105 | 6.07 | 99.5 | 113 |
| | Cu (A) 0.01 | 6.05 | 99.2 | 90 | 6.05 | 99.2 | 90 |
| | Cu (B) 0.0005 | 5.92 | 97.0 | ---- | 6.01 | 98.5 | ---- |
| | Cu (B) 0.001 | 5.96 | 97.7 | ---- | 6.01 | 98.5 | ---- |
| | Cu (B) 0.002 | 5.96 | 97.7 | ---- | 6.02 | 98.7 | ---- |
| | Cu (B) 0.003 | 5.98 | 98.0 | 95 | 6.02 | 98.7 | 98 |

(to be cont'd)

| raw material | | 1200°C firing | | | 1300°C firing | | |
|---|---|---|---|---|---|---|---|
| transition metal | | sintered | relative | bend | sintered | relative | bend |
| adhere method | adhered atom ratio | density g/cm³ | density % | strength kg/mm² | density g/cm³ | density % | strength kg/mm² |
| C1-1 Mn (A) | 0.003 | 5.33 | 84.4 | ---- | 5.50 | 90.2 | ---- |
| Mn (B) | 0.003 | 5.25 | 86.1 | 38 | 5.50 | 90.2 | 65 |
| Fe (A) | 0.003 | 5.38 | 88.2 | ---- | 5.70 | 93.4 | ---- |
| Fe (B) | 0.003 | 5.30 | 86.9 | 43 | 5.55 | 91.0 | 68 |
| Zn (A) | 0.003 | 5.38 | 88.2 | 43 | 5.60 | 91.8 | 52 |
| Zn (B) | 0.003 | 5.28 | 86.6 | 40 | 5.48 | 89.8 | 69 |
| Cu (B) | 0.003 | 5.30 | 86.9 | 42 | 5.52 | 90.5 | 60 |
| C1-2 ---- | ---- | 5.28 | 86.6 | 40 | 5.48 | 89.8 | 69 |

Table 2

| raw material | | | 1200°C firing | | | 1300°C firing | | |
|---|---|---|---|---|---|---|---|---|
| transition metal | | | sintered | relative | bend | sintered | relative | bend |
| adhere method | adhered atom ratio | | density g/cm³ | density % | strength kg/mm² | density g/cm³ | density % | strength kg/mm² |
| E1-3 Mn (A) | 0.003 | | 5.24 | 95.5 | ---- | 5.56 | 97.9 | ---- |
| Fe (A) | 0.003 | | 5.56 | 96.1 | ---- | 5.63 | 99.1 | ---- |
| Co (A) | 0.003 | | 5.14 | 95.5 | ---- | 5.61 | 98.8 | ---- |
| Ni (A) | 0.003 | | 5.23 | 97.4 | ---- | 5.67 | 99.8 | ---- |
| Zn (A) | 0.003 | | 5.23 | 97.1 | ---- | 5.57 | 98.1 | ---- |
| Cu (A) | 0.003 | | 5.55 | 97.7 | ---- | 5.67 | 99.8 | ---- |
| 1-4 Mn (A) | 0.003 | | 5.73 | 98.8 | ---- | ---- | ---- | ---- |
| Fe (A) | 0.003 | | 5.76 | 99.3 | ---- | ---- | ---- | ---- |
| Co (A) | 0.003 | | 5.69 | 98.1 | ---- | ---- | ---- | ---- |
| Ni (A) | 0.003 | | 5.69 | 98.1 | ---- | ---- | ---- | ---- |
| Zn (A) | 0.003 | | 5.71 | 98.4 | ---- | ---- | ---- | ---- |
| Cu (A) | 0.003 | | 5.69 | 98.1 | ---- | ---- | ---- | ---- |
| 1-5 Mn (A) | 0.003 | | 6.20 | 99.5 | ---- | 6.21 | 99.7 | ---- |
| Ni (A) | 0.003 | | 6.18 | 99.1 | ---- | 6.20 | 99.5 | ---- |
| Cu (A) | 0.003 | | 6.22 | 99.8 | ---- | 6.22 | 99.8 | ---- |
| C1-3 | ---- | ---- | 4.85 | 85.4 | ---- | 5.30 | 93.8 | ---- |
| C1-4 | ---- | ---- | 5.43 | 93.6 | ---- | ---- | ---- | ---- |
| C1-5 | ---- | ---- | 5.80 | 93.1 | ---- | 5.98 | 96.0 | ---- |

Example 2: Sintered body of zirconia partially stabilized with $Y_2O_3$ and its production.

(1) Preparation of raw particulate material

The same procedure as that for the production of Sample (1-1) in Example 1 is carried out in changing the mixture ratio of $ZrOCl_2$ and $YCl_3$ to produce co-precipitates of hydroxide.

The obtained co-precipitates of hydroxide was treated under the same condition as those of example 1 to produce partially stabilized zirconia powders with different $Y_2O_3$ contents.

Sample (2-1)

The resultant partially stabilized zirconia powders were treated with the solution used in example 1 under the similar conditions to produce raw particulate material (2-1) suited for the production of sintered bodies.

Sample (2-2)

The dried co-precipitates of hydroxide were treated in the similar way to that for sample (2-1) and further, calcined at 800°C for one hour to produce the raw material powder (2-2) suited for the production of a sintered body.

Sample (2-3)

The partially stabilized zirconia powders produced as described above was treated with the slurry used in example 1 under the similar conditions to produce the raw material powder (2-3).

(2) Production of a sintered body

The raw materials (2-1) to (2-3) were moulded under conditions similar to that of Example 1 and then fired in the atmosphere for 3 hours at the given temperature to result in a sintered body of zirconia partially stabilized with $Y_2O_3$.

For reference, the raw materials wherein $Y_2O_3$ content is less than 1.3 mol.%, the crystal particle size is more than 400 Å, and the atomic ratio of the transition metal to Zr is more than 1.0% omitting the treatment with the transition metal compounds, were used to mould and produce the sintered body. The firing temperature was 1500°C.

(3) Characteristics of Partiallty Stabilized Zirconia Powder and the Sintered Body made therefrom

The followig characteristics were measured on partially stabilized zirconia powder and a sintered body obtained in the above items (1) and (2).

Table 3 shows the characteristics of raw material powder (2-1) and the sintered body produced from that material.

Table 4 shows the characteristics of raw material powder (2-2) and (2-3) and the sintered body produced from those materials.

(A) Size of partially stabilized zirconia crystal particle: D The size D can be calculated from the width at the half value of the peak of X-ray diffraction by the following Schellar's formula:

$D = 0.9\lambda'/\beta \cos \theta$

$\lambda'$ : the wave length of X ray

$\beta$ : the width at the half value

of the diffraction peak

$\theta$ : the diffraction angle

(B) BET relative surface area of partially stabilized zirconia powder was measured by using mircomeritics (machine manufactured by Shimazur Works.)

(C) Fracture tenacity of a sintered body of partially stabilized zirconia : Klc was measured by Vickers indent test. The Vickers indenter was pressed to the polished surface of the samples, and the resulting indentation size and the resulting length of the generated crack were measured and Klc was calculated from the following formula which Niihara et al proposed. The applied indentation load was 50 kgf.

$(Klc\Phi/Ha^{1/2})H/E\Phi)^{0.4} = 0.035 \, (1/a)^{-1/2}$

$\Phi$ : restraint moduras

H : Vickers hardness

E : modulus of elasticity

a : half value of diagonal length of indentation

15

1 : length of crack generated from indentation.

(D) Then bending strength of a sintered body of partially stabilized zirconia; was measured in accordance with JIS R 1601 (1981) rule.

The sample of 3x4x40 mm in size was used, and measurement was carried out on span length of 30 mm under crosshead speed of 0.5 mm/min. and the value was determined by average from five samples.

(E) Content of tetragonal phase in the sintered body of partially stabilized zirconia.

The surface of the sample was polished by diamond slurry containing 3 $\mu$m in size of diamond particles, and then, X ray diffraction measurement was carried out on that surface followed by the calculation of the following formula.

$$\text{Tetragonal phase content (\%)} = \frac{(111)t}{(111)t+(111)m+(1\bar{1}\bar{1})m} \times 100$$

(111)t : tetragonal (111) plane diffraction intensity

(111)m monoclinic (111) plane diffraction intensity

(11$\bar{1}$)m : monoclinic (111) plane diffraction intensity

(111)t diffraction peak includes cubic (111)c diffraction peak, but the calculation was carried out presuming that that peak is entirely by tetragonal diffraction.

(F) Grain size in the sintered body of partially stabilized zirconia.

The grain size was measured by observing the fracture face of the sintered body through scanning type electron microscope. It was confirmed that all samples except of reference samples have a grain size ranging 0.1 to 0.3 $\mu$m.

Table 3

| tra. metal | | raw material powder | | | firing | sintered | fracture | bending | tetragonal |
|---|---|---|---|---|---|---|---|---|---|
| kind. | adhered atom. ratio | $Y_2O_3$ content | crystal particl. size | BET specific surface area | firing temperature | sintered density | fracture tenacity | bending strength | tetragonal content |
| | | mol.% | Å | $m^2/g$ | °C | $g/cm^3$ | $MN/m^{3/2}$ | $Kg/mm^2$ | % |
| Mn | 0.0005 | 1.7 | 230 | 28.5 | 1200 | 5.92 | 15.3 | 138 | 90 |
| | 0.001 | 1.7 | 230 | 28.5 | 1200 | 5.95 | 15.2 | 146 | 92 |
| | " | 2.0 | 210 | 25.6 | 1200 | 5.01 | 9.5 | 128 | -- |
| | 0.003 | 1.3 | 231 | 28.8 | 1100 | 5.93 | 13.8 | 150 | 85 |
| | " | 1.7 | 230 | 28.5 | 1200 | 6.01 | 14.8 | 164 | >95 |
| | " | ∅ | 230 | 28.5 | 1300 | 6.03 | 16.0 | 174 | >95 |
| | " | ∅ | 380 | 6.4 | 1300 | 6.03 | 15.7 | 147 | 93 |
| | " | 1.9 | 238 | 29.5 | 1300 | 6.04 | 11.2 | 135 | >95 |
| | " | 2.0 | 390 | 5.6 | 1300 | 6.04 | 9.4 | 132 | -- |
| | " | 2.2 | 226 | 30.5 | 1300 | 6.02 | 8.5 | 119 | -- |
| | 0.005 | 1.7 | 230 | 28.5 | 1300 | 6.03 | 13.2 | 125 | ≥95 |
| | " | 3.0 | 222 | 27.6 | 1300 | 6.03 | 7.5 | 115 | -- |
| Cu | 0.0005 | 1.7 | 230 | 28.5 | 1200 | 5.96 | 14.7 | 140 | 90 |
| | 0.001 | 1.7 | 230 | 28.5 | 1200 | 5.99 | 14.9 | 150 | 93 |
| | " | 2.0 | 218 | 25.6 | 1200 | 6.01 | 9.6 | 126 | -- |
| | 0.003 | 1.3 | 231 | 28.8 | 1100 | 5.98 | 14.5 | 145 | 93 |

(to be cont'd)

| tra. metal | | raw material powder | | | firing | | | | |
|---|---|---|---|---|---|---|---|---|---|
| kind. | adhered atom. ratio | $Y_2O_3$ content | crystal particl. size | BET specific surface area | temperature | sintered density | fracture tenacity | bending strength | tetragonal content |
| | | mol.% | Å | m²/g | °C | g/cm³ | MN/m³/² | Kg/mm² | % |
| Cu | 0.003 | 1.7 | 230 | 28.5 | 1200 | 6.02 | 15.3 | 165 | >95 |
| | " | " | 230 | 28.5 | 1300 | 6.05 | 15.6 | 170 | >95 |
| | " | " | 380 | 6.4 | 1300 | 6.05 | 16.1 | 139 | >95 |
| | " | 1.9 | 238 | 29.5 | 1300 | 6.06 | 10.9 | 135 | >95 |
| | " | 2.2 | 226 | 30.5 | 1300 | 6.07 | 8.6 | 134 | -- |
| | 0.005 | 1.7 | 230 | 28.5 | 1200 | 6.05 | 13.6 | 140 | >95 |
| | " | 3.0 | 222 | 27.6 | 1300 | 6.05 | 7.8 | 120 | -- |
| Fe | 0.003 | 1.7 | 230 | 28.5 | 1200 | 5.88 | 15.0 | 140 | >95 |
| | " | 2.2 | 226 | 30.5 | 1300 | 6.01 | 8.6 | 124 | -- |
| Co | 0.003 | 1.7 | 230 | 28.5 | 1200 | 5.91 | 14.8 | 145 | >95 |
| | " | 2.2 | 226 | 30.5 | 1300 | 6.02 | 8.5 | 128 | -- |
| Ni | 0.003 | 1.7 | 230 | 28.6 | 1200 | 6.03 | 15.3 | 168 | >95 |
| | " | 2.2 | 226 | 30.5 | 1300 | 6.07 | 8.7 | 131 | -- |
| Zn | 0.003 | 1.7 | 230 | 28.5 | 1200 | 6.01 | 15.5 | 160 | >95 |
| | " | 2.2 | 226 | 30.5 | 1300 | 6.07 | 8.5 | 133 | -- |
| Reference | -- | 1.7 | 230 | 28.5 | 1200 | 5.48 | -- | 48 | 45 |
| | | " | 238 | 29.5 | 1300 | 5.53 | -- | 55 | 52 |

(to be cont'd)

| kind. | tra. metal adhered atom. ratio | raw material powder | | | firing tem-perature °C | sintered density g/cm³ | fracture tenacity MN/m³/² | bending strength Kg/mm² | tetragonal content ·% |
|---|---|---|---|---|---|---|---|---|---|
| | | Y₂O₃ content mol.% | crystal particl. size Å | BET specific surface area m⁻/g | | | | | |
| | " | 2.0 | 218 | 25.6 | 1200 | 5.48 | -- | 40 | -- |
| | " | " | 380 | 5.6 | 1300 | 5.66 | -- | 23 | -- |
| | " | " | 585 | 1.3 | 1300 | 4.88 | -- | 58 | -- |
| | " | 2.2 | 226 | 30.5 | 1300 | 5.70 | -- | 58 | -- |
| | " | 3.0 | 222 | 27.6 | 1300 | 5.68 | -- | 63 | -- |
| Mn | 0.003 | 1.1 | 226 | 30.5 | 1100 | crack | -- | -- | 35 |
| | " | 1.7 | 230 | 28.5 | 1500 | crack | -- | -- | 32 |
| | " | " | 568 | 1.2 | 1300 | 5.65 | -- | 65 | 55 |
| | 0.015 | 2.2 | 226 | 30.5 | 1300 | 6.01 | 4.2 | 60 | -- |
| Cu | 0.003 | 1.1 | 226 | 30.5 | 1300 | crack | -- | -- | 30 |
| | " | 1.7 | 230 | 28.5 | 1500 | crack | -- | -- | 40 |
| | " | " | 568 | 1.2 | 1300 | 5.58 | -- | 63 | 48 |
| | 0.015 | 2.2 | 226 | 30.5 | 1300 | 6.01 | 4.2 | 60 | -- |

Table 4

| tra. metal spec. | deposit atom. ratio | Y$_2$O$_3$ content mol.% | crystal particl. size Å | BET specific surface area m²/g | firing temperature °C | sintered density g/cm³ | fracture tenacity MN/m$^{3/2}$ | bending strength Kg/mm² | tetragonal content % |
|---|---|---|---|---|---|---|---|---|---|
| **S (2-2)** | | | | | | | | | |
| Mn | 0.003 | 1.7 | 230 | 28.5 | 1200 | 5.98 | 14.8 | 155 | >95 |
| Cu | 0.003 | 1.7 | 230 | 28.5 | 1200 | 6.01 | 14.9 | 156 | >95 |
| Fe | 0.003 | 1.7 | 230 | 28.5 | 1200 | 5.88 | 16.1 | 139 | 92 |
| Co | 0.003 | 1.7 | 230 | 28.5 | 1200 | 5.88 | 15.8 | 140 | 94 |
| Ni | 0.003 | 1.7 | 230 | 28.5 | 1200 | 5.99 | 14.5 | 149 | >95 |
| Zn | 0.003 | 1.7 | 230 | 28.5 | 1200 | 5.92 | 14.8 | 148 | >95 |
| Reference | -- | 1.7 | 230 | 28.5 | 1200 | 5.48 | -- | 48 | 45 |
| **S (2-3)** | | | | | | | | | |
| Mn | 0.003 | 1.7 | 230 | 28.5 | 1300 | 5.99 | 14.8 | 150 | 90 |
| Cu | 0.003 | 1.7 | 230 | 28.5 | 1300 | 6.02 | 14.7 | 156 | >95 |
| Fe | 0.003 | 1.7 | 230 | 28.5 | 1300 | 6.00 | 15.1 | 150 | 92 |
| Co | 0.003 | 1.7 | 230 | 28.5 | 1300 | 5.98 | 14.7 | 140 | 90 |
| Ni | 0.003 | 1.7 | 230 | 28.5 | 1300 | 6.02 | 13.9 | 155 | 89 |
| Zn | 0.003 | 1.7 | 230 | 28.5 | 1300 | 6.00 | 14.1 | 145 | 86 |
| Reference | -- | 1.7 | 230 | 28.5 | 1300 | 5.56 | -- | 52 | 40 |

Example 3 : Sintered Body of Partially Stabilized containing alumina and Method of Production of the Same

(1) Preparation of raw material powder to be used for the production of a sintered body

Sample (3-1)

The procedures of Example 1 to produce the powder principally containing zirconium compounds was repeated under the same conditions as in Example 1, except of changing the amount of $YCl_3$, $MgCl_2$, $CaCl_2$, and $CeCl_23$, to be added, to prepare partially stabilized zirconia raw particulate materials.

A solution of the resultant partially stabilized zirconia material, alumina powder, and nitrates of each transition metal compound in ethanol was put in a milling pot, and agitated and ground, then the solven was removed therefrom and drying yielded the raw material owder to be used for the production of a sintered body.

Sample (3-2)

The procedure for Sample (3-1) to prepare the material principally containing zirconium compound was repeated under similar conditions with the exception that now alumina powder was added to the mixed solution of zirconium compounds and stabilizer, to prepare zirconia powder partially stabilized with alumina. The obtained particulate zirconia material partially stabilized with alumina and a solution of nitrate of each transition metal compound in ethanol were put in the milling pot, agitated and ground followed by removing solvent therefrom and drying to obtain the raw material powder (3-2) suited for use in the production of sintered bodies.

Samples (3-3)

The procedures for Sample (3-1) to prepare the material consisting essentially of zirconium compound were repeated under similar conditions with the exception of the addition of $AlCl_3$ powder to the mixed solution of zirconium compound and stabilizing agents so as to form a homogeneous mixture, to prepare zirconia powder partially stabilized with alumina.

The obtained zirconia powder partially stabilized with alumina and a solution of nitrate of each transition metal compound in ethanol were put in the milling pot, agitated and ground followed by removing solvent therefrom and drying to obtain the raw material owder (3-3) suited for the production of sintered bodies.

(2) Production of a sintered body

The raw material powder(s) (3-1) to (3-3) were moulded under conditions similar to that of Example 1 into a desired shape, then fired at the given temperature for 3 hours at the atmosphere, yielding a sintered body of zirconia partially stabilized with alumina.

For reference, a sintered body was produced using the raw material powder prepared without the treatment by the transition metal compound using the same procedure and the same sinter conditions.

Further, for comparison with raw material (3-1), a sintered body was produced under the same conditions by using the raw material with 1.0% of $Y_2O_3$ content.

(3) Characteristics of raw material powder and a sintered body.

The same properties as these of Example 2 were measured at the raw particulate materials as prepared and the sintered body as produced.

Further, Vickers hardness and bending strength after thermal treatment at 200°C and for 100 hours, of the resultant sintered body were measured.

Table 5 shows the properties of Sample (3-1) and the sintered body made therefrom.

The contents of tetragonal phase in all the sintered bodies except of the Reference Examples were 95% or more.

It can be confirmed that the grain size of $ZrO_2$ in the sintered body as produced of all Samples except of Reference Samples is 2 $\mu$m or less, and the particle size of $Al_2O_3$ is 4 $\mu$m or less.

Table 6 shows the properties of Sample (3-2) and the sintered body made therefrom.

The contents of tetragonal phase in all the sintered bodies except of the Reference Samples were 95% or more.

It can be confirmed that grain size of $ZrO_2$ in the sintered bodies as produced of all Samples except of Reference Samples is 2 $\mu$m or less, and the particle size of $Al_2O_3$ is 4 $\mu$m or less.

Table 7 shows the properties of Sample (3-3) and the sintered body made therefrom.

The contents of tetragonal phase in all the sintered bodies except of Reference Sample were 95% or more.

It an be confirmed that grain size of $ZrO_2$ in the sintered bodies as produces of all Samples except of Reference Samples is 2 $\mu$m or less, and the particle size $Al_2O_3$ is 4 $\mu$m or less.

Table 5

| stabilizer kind | cont. mol.% | partially stabil. zir. pow. particl. size µm | spec. surface m²/g | alumina powder particl. size µm | spec. surface m²/g | $Al_2O_3$ conten. mol.% | raw powder tran. metal deposit kind | atom. ratio | firing temp. °C | sintered density g/cm³ | fracture tenacity (KIc) MN/m^3/2 | bending strength Kg/mm² | bending strength after t. Kg/mm² | vickers hardness kg/mm² |
|---|---|---|---|---|---|---|---|---|---|---|---|---|---|---|
| $Y_2O_3$ | 1.3 | 190 | 32 | 0.2 | 20 | 20 | Mn | 0.002 | 1300 | 5.58 | 14.0 | 132 | -- | 1260 |
| | 1.7 | 230 | 28 | 0.5 | 7 | 10 | Mn | 0.001 | 1300 | 5.82 | 15.3 | 146 | 110 | 1250 |
| | " | " | " | 0.1 | 30 | 20 | Cu | 0.003 | 1400 | 5.57 | 18.5 | 150 | 105 | 1360 |
| | 2.0 | 320 | 10 | 0.1 | 30 | 50 | Mn | 0.002 | 1400 | 4.70 | 12.3 | 170 | -- | 1600 |
| | " | 230 | 28 | 0.5 | 7 | 30 | Ni | 0.0001 | 1300 | 5.32 | 10.5 | 131 | -- | 1420 |
| | 2.5 | 230 | 28 | 0.1 | 30 | 1.0 | Cu | 0.002 | 1400 | 5.95 | 13.0 | 125 | -- | 1150 |
| | " | " | " | 0.5 | 7 | 40 | Fe | 0.009 | 1400 | 5.10 | 8.3 | 135 | -- | 1530 |
| | 3.5 | 150 | 35 | 0.5 | 10 | 20 | Zn | 0.003 | 1300 | 5.57 | 9.7 | 130 | -- | 1260 |
| MgO | 8.1 | 230 | 28 | 0.5 | 7 | 10 | Cu | 0.003 | 1300 | 5.52 | 10.2 | 132 | 95 | 1230 |
| CaO | 8.0 | 230 | 28 | 0.5 | 7 | 10 | Co | 0.003 | 1400 | 5.45 | 7.2 | 125 | -- | 1430 |
| $CeO_2$ | 8.0 | 200 | 29 | 0.5 | 7 | 20 | Mn | 0.003 | 1400 | 5.66 | 10.0 | 90 | 90 | 1200 |
| $Y_2O_3$ | 1.0 | 190 | 35 | 0.2 | 20 | 20 | Cu | 0.002 | 1300 | 5.07 | 4.8 | 53 | -- | 920 |
| | 2.0 | 230 | 28 | 0.5 | 7 | 30 | -- | -- | 1300 | 4.74 | 4.2 | 65 | 47 | 810 |

22

Table 6

| alumina Powder | | alumina contain. zirconia powder | | | | | raw powder tran. metal | | firing temp. | sintered density | fracture tenacity (Kic) | bending strength | bending strength after t. | vickers hardness |
| --- | --- | --- | --- | --- | --- | --- | --- | --- | --- | --- | --- | --- | --- | --- |
| grain size | specific surface | zirconia component stabilizer kind | content | partic. size | $Al_2O_3$ cont. | spec. sur. | kind | deposit atom. ratio | | | | | | |
| $\mu m$ | $m^2/g$ | | mol.% | | mol.% | $m^2/g$ | | | °C | $g/cm^3$ | $MN/m^{3/2}$ | $Kg/mm^2$ | $Kg/mm^2$ | $Kg/mm^2$ |
| 0.1 | 30 | $Y_2O_3$ | 1.3 | 250 | 40 | 30 | Mn | 0.009 | 1400 | 5.11 | 10.5 | 130 | -- | 1530 |
| 0.3 | 10 | ″ | 3.5 | 230 | 10 | 30 | Mn | 0.002 | 1200 | 5.82 | 12.5 | 130 | -- | 1230 |
| 0.5 | 7 | ″ | 1.7 | 250 | 20 | 30 | Cu | 0.003 | 1300 | 5.57 | 15.0 | 140 | 100 | 1350 |
| ″ | ″ | ″ | ″ | ″ | ″ | ″ | Fe | 0.005 | 1300 | 5.56 | 9.0 | 135 | -- | 1340 |
| ″ | ″ | ″ | ″ | ″ | ″ | ″ | Ni | 0.003 | 1400 | 5.56 | 8.8 | 120 | -- | 1330 |
| ″ | ″ | ″ | 2.5 | 230 | 30 | 25 | Cu | 0.005 | 1400 | 5.33 | 11.3 | 133 | -- | 1420 |
| ″ | ″ | MgO | 8.1 | 250 | 1.0 | 30 | Cu | 0.002 | 1400 | 5.76 | 10.0 | 100 | -- | 1130 |
| ″ | ″ | Cao | 8.0 | 230 | 50 | 30 | Mn | 0.003 | 1400 | 4.74 | 8.5 | 105 | -- | 1580 |
| 0.5 | 7 | Y2O3 | 1.7 | 230 | 20 | 30 | -- | -- | 1300 | 4.63 | 4.3 | 60 | 42 | 860 |

EP 0 214 291 B1

Table 7

| alumina contain. zirconia powder | | | raw powder tran. metal | | firing temp. °C | sintered density g/cm³ | fracture tenacity (Klc) MN/m^3/2 | bending strength Kg/mm² | bending strength after t. Kg/mm² | vickers hardness Kg/mm² |
|---|---|---|---|---|---|---|---|---|---|---|
| zirconia component stabilizer | Al₂O₃ cont. mol.% | spec. surf. m²/g | spec. | deposit atom. ratio | | | | | | |
| kind / cont. mol.% | | | | | | | | | | |
| Y₂O₃  1.3 | 3 | 30 | Ni | 0.002 | 1300 | 6.00 | 9.5 | 115 | -- | 1150 |
| "  1.7 | 20 | 35 | Mn | 0.002 | 1300 | 5.57 | 13.5 | 135 | 110 | 1350 |
| "  2.5 | 40 | 30 | Cu | 0.002 | 1400 | 5.10 | 11.0 | 120 | -- | 1530 |
| MgO  8.1 | 10 | 35 | Mn | 0.002 | 1300 | 5.53 | 10.3 | 120 | -- | 1250 |
| CaO  8.0 | 30 | 35 | Cu | 0.002 | 1300 | 5.08 | 10.6 | 115 | -- | 1420 |
| Y203  0.5 | 20 | 35 | Mn | 0.002 | 1300 | 4.66 | 4.5 | 70 | -- | 750 |
| (Ref)  2.0 | 30 | 35 | -- | -- | 1300 | 4.56 | 4.5 | 66 | -- | 750 |

## Industrial Applicability

The first invention in this application is a process for preparation of sinterable raw material powder suited for use in the production of sintered body of zirconia.

24

The said process is as set forth in the above mentioned examples an extremely simple process wherein the transition metal is deposited onto the powder consisting essentially of zirconium compound.

In the inventive process, the transition metal compounds are deposited uniformly on the surface of the powder particles consisting essentially of zirconium compounds so that the sinter activating effect can be obtained even with a small amount, and as set forth in the examples the prepared particulate material can be sintered easily.

Accordingly, the said process can be accepted widely for the process of the preparation of the raw particulate material in use for the production of sintered bodies containing fully or partially stabilized zirconia, and so on.

The second invention is method of the production of high density sintered body of zirconia.

This method is characterized by using the sinterable raw particulate material prepared in accordance with the first invention.

In this method, as set force in the above mentioned examples the sintering can be performed at the atmosphere, and any special equipment or operation is unnecessary to produce sufficient dense and satisfactory mechanical properties of the desired specific sintered body of zirconia.

In the preceding examples, only atmospheric firing to sinter was used, but other techniques such as hot press technique and HIP method can be used to produce such high density zirconia sintered bodies.

The third invention is a method of a the production of a sintered body of high density and high toughness $Y_2O_3$ partially stabilized with zirconia.

This method is characterized by limiting the starting material to the powder consisting essentially of zirconium compound.

In accordance with this method, the raw particulate material can have lower temperature sintering ability in addition to easy sinter, whereas the grain growth during sintering treatment of sintered body is restricted so as to produce high density and high toughness zirconia partially stabilized with $Y_2O_3$ sintered body having microstructure, and high content of tetragonal phase.

The fourth invention is a sintered body of zirconia partially stabilized with $Y_2O_3$ having a novel composition.

The said sintered body is characterized by having an $Y_2O_3$ content of more than 1.3 mol.% and less then 2.0 mol.% and further the content of tetragonal phase being more than 65%.

The inventive sintered body is expected to function as a structural member of high density and high toughness.

The fifth invention is a sintered body of zirconia partially stabilized with alumina having a novel composition.

This sintered body has high density and high hardness imparted by containing alumina, as set forth in the above mentioned examples, and further evidences high strength and excellent stability.

Particularly, when the sintered body of zirconia partially stabilized with $Y_2O_3$ of the fourth invention incorporates alumina, high toughness can be imparted as set forth in the above example. Therefore, such sintered body can be expected to be utilized as a structural member of high hardness and high thermal stability such as a cutting material.

The present invention provides a process for the preparation of sinterable raw particulate material and a sintered body of zirconia made therefrom that has a high density, high strength, high toughness, high hardness and excellent thermal stability as well as an economical method for the production of the same. Therefore, the present invention can provide industrial significance.

## Claims

1. A process for the production of a sinterable raw material powder suited for use in the production of a sintered body of fully or partially stabilized zirconia or of fully or partially stabilized zirconia containing 1 to 60 mol % of α-alumina wherein the content of tetragonal phase is 65% or more, characterized by:

   (a) adding a powder containing zirconium compound(s) and containing stabilizing agent(s) to a solution or slurry containing at least one kind of transition metal compound(s) excluding zirconium compound to be suspended therein, wherein the powder containing zirconium compound(s) and containing stabilizing agent(s) is one selected from the group consisting of fully or partially stabilized zirconia powder, fully or partially stabilized zirconia containing alumina powder and a precursor powder which can produce fully or partially stabilized zirconia or alumina-containing fully or partially stabilized zirconia powder by thermal decomposition: the stabilizing agent is one selected from the group consisting of $Y_2O_3$, CaO, MgO, $CeO_2$ and yttrium compounds, calcium compounds, magnesium compounds or cerium compounds which can produce $Y_2O_3$, CaO, MgO or $CeO_2$, respectively,

by thermal decomposition, the transition metal compound(s) are compound(s) of at least one kind of transition metal selected from the group consisting of Mn, Fe, Co, Ni, Cu and Zn; and the atomic ratio of the transition metal excluding Zr to Zr or to Zr plus Al in said sinterable raw material is in the range of 0.0001 to 0.01;

(b) subsequently removing the solvent from the suspended slurry; and

(c) drying the residue to obtain the objective product.

2. The process according to claim 1, characterized in that the precursor which can produce fully or partially stabilized zirconia by thermal decomposition is a co-precipitation precipitated from a solution containing zirconium compound(s) and stabilizing agent(s).

3. The process according to claim 1, characterized in that the precursor powder which can produce fully or partially stabilized zirconia containing $\alpha$-alumina is a co-precipitation precipitated from a solution or slurry containing:

(a) $\alpha$-alumina powder or $\alpha$-aluminium compounds which by their thermal decomposition can produce $\alpha$-alumina,

(b) zirconium compounds, and

(c) stabilizing agent(s).

4. A process for the production of a sintered body, characterized in that a fully or partially stabilized zirconia sintered body or fully or partially stabilized zirconia sintered body containing 1 to 60 mol% of $\alpha$-alumina wherein the content of tetragonal phase is 65% or more, is produced by:

(a) adding a powder containing zirconium compound(s) and containing stabilizing agent(s) to a solution or slurry containing at least one kind of transition metal compound(s) excluding zirconium compound to be suspended therein, wherein the powder containing zirconium compound(s) and containing stabilizing agent(s) is one selected from the group consisting of partially stabilized zirconia powder, partially stabilized zirconia powder containing $\alpha$-alumina and a precursor powder which can produce fully or partially stabilized zirconia or fully or partially stabilized zirconia powder containing $\alpha$-alumina by thermal decomposition: the stabilizing agent is one selected from the group consisting of $Y_2O_3$, CaO, MgO, $CeO_2$ and yttrium compounds, calcium compounds, magnesium compounds or cerium compounds which can produce $Y_2O_3$, CaO, MgO, $CeO_2$, respectively, by thermal decomposition, the transition metal compound(s) are compound(s) of at least one kind of transition metal selected from the group consisting of Mn, Fe, Co, Ni, Cu and Zn; and the atomic ratio of the transition metal excluding Zr to Zr or to Zr plus Al in said sinterable raw material is in the range of 0.0001 to 0.01;

(b) subsequently removing the solvent from the suspended slurry;

(c) drying the residue to produce raw material powder; and

(d) moulding and sintering the raw material powder,

5. The process according to claim 4, characterized in that the sintering is conducted under atmospheric pressure at the temperature in the range of 1100°C to 1700°C.

6. The process according to claim 4, characterized in that the powder containing zirconium compound and $Y_2O_3$ as a stabilizing agent is partially stabilized zirconia powder having a crystal particle size of less than 400Å and a BET specific surface area of 2 m$^2$/g or more or a precursor powder which can produce said zirconia powder partially stabilized with $Y_2O_3$.

7. The process according to claim 6, characterized in that the precursor powder which can produce zirconia powder partially stabilized with $Y_2O_3$ by thermal decomposition is a co-precipitation precipitated from a solution containing zirconium compound(s) and yttrium compound(s).

8. The process according to claim 6, characterized in that the sintering is conducted under atmospheric pressure at a temperature in the range of 1100°C to 1500°C.

9. The process according to claim 4, characterized in that the sintered body is a stabilized zirconia sintered body having the following ratio in the composition:

26

```
partially stabilized zirconia    : 99 to 40 mole %

α-alumina                        : 1 to 60 mole %

transition metal oxide           :   the atomic ratio thereof

excluding ZrO₂                       to ₜhe combination of Zr

                                     and Al ranging 0.0001 to

                                     0.01;
```

the partially stabilized zirconia powder containing α-alumina consists of a partially stabilized zirconia powder or its precursor having a crystal size of 400Å or less and a BET specific surface area of 2 m²/g or more and an α-alumina or its precursor having a crystal particle size of 1.0 μm or less and BET specific surface area of 2 m²/g or more; and the sintering is carried out under atmospheric pressure at a temperature in the range of 1100°C to 1500°C.

10. Sintered body of zirconia partially stabilized with $Y_2O_3$ which is characterized by an $Y_2O_3$ content in the range of 1.3 mole % to 2.0 mole %, a content of tetragonal phase of 65% or more, a grain size of $ZrO_2$ in the sintered body of 0.5 μm or less, a sintered density of 5.8 g/cm³ or more, at least one kind of transition metal selected from the group consisting of Mn, Fe, Co, Ni, Cu and Zn and an atomic ratio of the transition metal excluding Zr to Zr or to Zr plus Al of 0.0001 to 0.01.

11. Sintered body of zirconia partially stabilized containing α-alumina which is characterized by the following ratio in the composition:

```
partially stabilized zirconia    : 99 to 40 mole %

α-alumina                        : 1 to 60 mole %

transition metal oxide           : 0.0001 to 0.01 of the

exluding ZrO₂                       atomic ratio thereof to the combination  of Zr and

                                    Al
```

selected from the group consisting of Mn, Fe, Co, Ni, Cu and Zn wherein the grain size of partially stabilized zirconia is 2 μm or less and the grain size of α-alumina is 4 μm or less.

12. Sintered body according to claim 11, characterized in that the partially stabilized zirconia is stabilized by $Y_2O_3$, MgO, CaO or $CeO_2$ and has tetragonal phase of 65% or more.

## Revendications

1. Procédé pour la production d'une poudre de matière première frittable appropriée à une utilisation dans la production d'un corps fritté d'une zircone totalement ou partiellement stabilisée ou d'une zircone totalement ou partiellement stabilisée contenant 1 à 60 moles% d'α-alumine où la teneur en phase tétragonale est de 65% ou plus, caractérisé par :
   (a) l'addition d'une poudre contenant un ou plusieurs composés de zirconium et contenant un ou plusieurs agents stabilisants à une solution ou bouillie contenant au moins une sorte d'un ou plusieurs composés de métal de transition à l'exclusion du composé de zirconium à y mettre en suspension, où la poudre contenant le ou les composés de zirconium et contenant l'agent ou les agents stabilisants est choisie dans le groupe consistant en poudre de zircone totalement ou partiellement stabilisée, poudre de zircone contenant de l'alumine totalement ou partiellement stabilisée et une poudre précurseur qui peut produire de la zircone totalement ou partiellement stabilisée ou de la poudre de zircone totalement ou partiellement stabilisée contenant de l'alumine par décomposition thermique: l'agent stabilisant étant choisi dans le groupe consistant en $Y_2O_3$, CaO, MgO, $CeO_2$ et composés d'yttrium, composés de calcium, composés de magnésium ou composés de cérium qui peuvent produire respectivement $Y_2O_3$, CaO, MgO ou $CeO_2$, par décompo-

EP 0 214 291 B1

sition thermique, le ou les composés de métal de transition étant un ou des composés d'au moins une sorte d'un métal de transition choisi dans le groupe consistant en Mn, Fe, Co, Ni, Cu et Zn ; et le rapport atomique du métal de transition, à l'exclusion de Zr, à Zr ou à Zr plus Al dans ladite matière première frittable est compris entre 0,0001 et 0,01 ;

(b) l'élimination subséquente du solvant de la bouillie en suspension ; et

(c) le séchage du résidu pour obtenir le produit recherché.

2.  Procédé selon la revendication 1, caractérisé en ce que le précurseur qui peut produire la zircone totalement ou partiellement stabilisée par décomposition thermique est une co-précipitation précipitée d'une solution contenant un ou des composés de zirconium et un ou plusieurs agents stabilisants.

3.  Procédé selon la revendication 1, caractérisé en ce que la poudre précurseur qui peut produire la zircone totalement ou partiellement stabilisée contenant l'$\alpha$-alumine est une co-précipitation précipitée d'une solution ou bouillie contenant :

(a) une poudre d'$\alpha$-alumine ou des composés d'$\alpha$-aluminiumqui ,par leur décomposition thermique, peuvent donner de l'$\alpha$-alumine ;

(b) des composés de zirconium et

(c) un ou plusieurs agents stabilisants.

4.  Procédé pour la production d'un corps fritté, caractérisé en ce qu on produit un corps fritté en zircone totalement ou partiellement stabilisée ou un corps fritté en zircone totalement ou partiellement stabilisée contenant 1 à 60 moles% d'$\alpha$ alumine où la teneur en phase tétragonale est de 65% ou plus, par :

(a) l'addition d'une poudre contenant un ou plusieurs composés de zirconium et contenant un ou plusieurs agents stabilisants à une solution ou bouillie contenant au moins une sorte d'un ou plusieurs composés de métal de transition, à l'exclusion du composé de zirconium à y mettre en suspension, où la poudre contenant le ou les composés de zirconium et contenant le ou les agents stabilisants est choisie dans le groupe consistant en poudre de zircone partiellement stabilisée, poudre de zircone partiellement stabilisée contenant de l'$\alpha$-alumine et une poudre précurseur qui peut donner de la zircone totalement ou partiellement stabilisée ou de la poudre de zircone totalement ou partiellement stabilisée contenant de l'$\alpha$-alumine, par décomposition thermique : l'agent stabilisant étant choisi dans le groupe consistant en $Y_2O_3$, CaO, MgO, $CeO_2$ et composés d'yttrium, composés de calcium, composés de magnésium ou composés de cérium qui peuvent produire respectivement $Y_2O_3$, CaO, MgO, $CeO_2$ par décomposition thermique, le ou les composés de métal de transition étant un ou des composés d'au moins une sorte d'un métal de transition choisi dans le groupe consistant en Mn, Fe, Co, Ni, Cu et Zn ; et le rapport atomique du métal de transition, à l'exclusion de Zr, à Zr ou à Zr plus Al dans ladite matiere première frittable est compris entre 0,0001 et 0,01 ;

(b) l'élimination subséquente du solvant de la bouillie en suspension ;

(c) le séchage du résidu pour donner la poudre de matière première ; et

(d) le moulage et le frittage de la poudre de matière première.

5.  Procédé selon la revendication 4, caractérisé en ce que le frittage est entrepris à la pression atmosphérique à la température comprise entre 1100°C et 1700°C.

6.  Procédé selon la revendication 4, caractérisé en ce que la poudre contenant le composé de zirconium et $Y_2O_3$ comme agent stabilisant est une poudre de zircone partiellement stabilisée ayant une taille des particules de cristal de moins de 400 Å et une aire superficielle spécifique par BET de 2 m$^2$/g ou plus ou une poudre précurseur qui peut donner ladite poudre de zircone partiellement stabilisée par $Y_2O_3$.

7.  Procédé selon la revendication 6, caractérisé en ce que la poudre précurseur qui peut donner la poudre de zircone partiellement stabilisée par $Y_2O_3$ par décomposition thermique est une co-précipitation précipitée d'une solution contenant un ou plusieurs composés de zirconium et un ou plusieurs composés d'yttrium.

8.  Procédé selon la revendication 6, caractérisé en ce que le frittage est entrepris à la pression atmosphérique à une température comprise entre 1100 et 1500°C.

28

**9.** Procédé selon la revendication 4, caractérisé en ce que le corps fritté est un corps fritté en zircone stabilisée ayant le rapport suivant dans sa composition:

```
zircone partiellement stabilisée : 99 à 40 moles%
∝-alumine                         :  1 à 60 moles%
oxyde de métal de transition
à l'exclusion de ZrO₂            :  son rapport
                                    atomique à la
                                    combinaison
                                    de Zr et de Al
                                    compris entre
                                    0,0001 et 0,01;
```

La poudre de zircone partiellement stabilisée contenant l'α alumine se compose d'une poudre de zircone partiellement stabilisée ou de son précurseur ayant une taille des cristaux de 400 Å ou moins et aire superficielle spécifique par BET de 2 $m^2$/g ou plus et une $\alpha$-alumine ou son précurseur ayant une taille des particules cristallines de 1,0 $\mu$m ou moins et une aire superficielle spécifique par BET de 2 $m^2$/g ou plus ; et le frittage est effectué à la pression atmosphérique à une température comprise entre 1100 et 1500°C.

**10.** Corps fritté de zircone partiellement stabilisée par $Y_2O_3$ qui est caractérisé par une teneur en $Y_2O_3$ comprise entre 1,3 moles% et 2,0 moles%, une teneur en phase tétragonale de 65% ou plus, une taille du grain de $ZrO_2$ dans le corps fritté de 0,5 $\mu$m ou moins, une densité frittée de 5,8 g/$cm^3$ ou plus, au moins un type de métal de transition choisi dans le groupe consistant en Mn, Fe, Co, Ni, Cu et Zn et un rapport atomique du métal de transition, à l'exclusion de Zr, à Zr ou à Zr plus Al de 0,0001 à 0,01.

**11.** Corps fritté de zircone partiellement stabilisée contenant de l'α-alumine qui est caractérisé par le rapport suivant de la composition :

```
zircone partiellement stabilisée : 99 à 40 moles%
∝-alumine                         :  1 à 60 moles%
oxyde de métal de transition,
à l'exclusion de ZrO₂,choisi
dans le groupe consistant en
Mn, Fe, Co, Ni, Cu et Zn         :  0,0001 à 0,01 du
                                    rapport atomique
                                    à la combinaison
                                    de Zr et Al
```

où la taille du grain de la zircone partiellement stabilisée est de 2 $\mu$m ou moins et la taille du grain de l'α-alumine est de 4 $\mu$m ou moins.

**12.** Corps fritté selon la revendication 11, caractérisé en ce que la zircone partiellement stabilisée est stabilisée par $Y_2O_3$, Mg, CaO ou $CeO_2$ et a une phase tétragonale de 65% ou plus.

**Patentansprüche**

**1.** Verfahren zur Herstellung von sinterbaren Rohmaterialpulvern, die geeignet sind zur Verwendung bei der Herstellung eines Sinterkörpers aus vollständig oder teilweise stabilisierter Zirkonerde der aus vollständig der teilweise stabilisierter Zirkonderde enthaltend 1 bis 60 mol-% $\alpha$-Tonerde, wobei der Gehalt an tetragonaler Phase 65% oder mehr beträgt, dadurch gekennzeichnet, daß man

(a) ein Pulver, enthaltend Zirkoniumverbindung(en) und enthaltend (ein) Stabilisatormittel, zu einer Lösung oder Aufschlämmung gibt, enthaltend mindestens eine Art von Übergangsmetallverbindung-(en), mit Ausnahme von Zirkoniumverbindungen, die darin suspendiert werden sollen, wobei das Zirkoniumverbindung(en) und (ein) Stabilisatormittel enthaltende Pulver ein solches ist, das ausgewählt ist aus der Gruppe bestehend aus vollständig oder teilweise stabilisiertem Zirkonerdepulver, vollständig oder teilweise stabilisierter Zirkonerde, enthaltend Tonerdepulver, und einem Vorläuferpulver, das vollständig oder teilweise stabilisiert Zirkonerde- oder Tonerde-haltige vollständig oder teilweise stabilisierte Zirkonerdepulver durch thermische Zersetzung bilden kann, wobei das Stabilisierungsmittel ein solches ist, ausgewählt aus der Gruppe bestehend aus $Y_2O_3$, CaO, MgO, $CeO_2$ und Yttriumverbindungen, Calciumverbindungen, Magnesiumverbindungen oder Cerverbindungen, die $Y_2O_3$, CaO, MgO bzw. $CeO_2$ durch thermische Zersetzung ergeben können, wobei die Übergangsmetallverbindung(en) (eine) Verbindung(en) ist/sind, von mindestens einer Art Übergangsmetall, ausgewählt aus der Gruppe bestehend aus Mn, Fe, Co, Ni, Cu und Zn, und das Atomverhältnis des Übergangsmetalls mit Ausnahme von Zr zu Zr oder zu Zr plus Al in dem sinterbaren Rohmaterial im Bereich von 0,0001 bis 0,01 liegt;

(b) anschließend das Lösungsmittel von der suspendierten Aufschlämmung entfernt und

(c) den Rückstand trocknet, um das erwünschte Produkt zu erhalten.

2. Verfahren nach Anspruch 1, dadurch gekennzeichnet, daß der Vorläufer, der die vollständig oder teilweise stabilisierte Zirkonerde durch thermische Zersetzung ergeben kann, ein Copräzipitat ist, das ausgefallen ist aus einer Lösung, enthaltend Zirkoniumverbindung(en) und (ein) Stabilisatormittel.

3. Verfahren nach Anspruch 1, dadurch gekennzeichnet, daß das vorläuferpulver, das die vollständig oder teilweise stabilisierte Zirkonerde, enthaltend $\alpha$-Tonerde, ergeben kann, ein Copräzipitat ist, das ausgefallen ist aus einer Lösung oder Aufschlämmung, enthaltend

(a) $\alpha$-Tonerdepulver oder $\alpha$-Tonerdeverbindungen, die durch thermische Zersetzung $\alpha$-Tonerde ergeben können,

(b) Zirkoniumverbindungen und

(c) (ein) Stabilisatormittel.

4. Verfahren zur Herstellung eines Sinterkörpers, dadurch gekennzeichnet, daß ein vollständig oder teilweise stabilisierter gesinterter Zirkonerdekörper oder vollständig oder teilweise stabilisierter Zirkonerdekörper, enthaltend 1 bis 60 mol-% $\alpha$-Tonerde, wobei der Gehalt an tetragonaler Phase 65% oder mehr beträgt, hergestellt wird durch

(a) Zugabe eines Pulvers, enthaltend Zirkoniumverbindung(en) und enthaltend (ein) Stabilisatormittel, zu einer Lösung oder Aufschlämmung gibt, enthaltend mindestens eine Art von Übergangsmetallverbindung(en), mit Ausnahme von Zirkoniumverbindungen, die darin suspendiert werden sollen, wobei das Zirkoniumverbindung(en) und Stabilisatormittel enthaltende Pulver ein solches ist, das ausgewählt ist aus der Gruppe bestehend aus teilweise stabilisiertem Zirkonerdepulver, teilweise stabilisiertem Zirkonerdepulver, enthaltend Tonerdepulver, und einem Vorläuferpulver, das vollständig oder teilweise stabilisierte Zirkonerde oder vollständig oder teilweise stabilisierte Tonerde-haltige Zirkonerdepulver durch thermische Zersetzung bilden kann, wobei das Stabilisierungsmittel ein solches ist, ausgewählt aus der Gruppe bestehend aus $Y_2O_3$, CaO, MgO, $CeO_2$ und Yttriumverbindungen, Calciumverbindungen, Magnesiumverbindungen oder Cerverbindungen, die $Y_2O_3$, CaO, MgO bzw. $CeO_2$ durch thermische Zersetzung ergeben können, wobei die Übergangsmetallverbindung(en) (eine) Verbindung(en) ist/sind, von mindestens einer Art Übergangsmetall, ausgewählt aus der Gruppe bestehend aus Mn, Fe, Co, Ni, Cu und Zn, und das Atomverhältnis des Übergangsmetalls mit Ausnahme von Zr zu Zr oder zu Zr plus Al in dem sinterbaren Rohmaterial im Bereich von 0,0001 bis 0,01 liegt;

(b) anschließendes Entfernen des Lösungsmittels von der suspendierten Aufschlämmung;

(c) Trocknen des Rückstands unter Bildung des Rohmaterialpulvers und

(d) Formen und Sinter des Rohmaterialpulvers.

5. Verfahren nach Anspruch 4, dadurch gekennzeichnet, daß das Sintern unter Atmosphärendruck bei einer Temperatur im Bereich von 1100°C bis 1700°C durchgeführt wird.

**6.** Verfahren nach Anspruch 4, dadurch gekennzeichnet, daß das Pulver, enthaltend Zirkoniumverbindung und $Y_2O_3$ als stabilisierendes Mittel, teilweise stabilisiertes Tonerdepulver mit einer Kristallteilchengröße von weniger als 400 Å und einer BET-spezifischen Oberfläche von 2 $m^2$/g oder darüber oder ein Vorläuferpulver ist, das die teilweise mit $Y_2O_3$ stabilisierte Zirkonerde bilden kann.

**7.** Verfahren nach Anspruch 6, dadurch gekennzeichnet, daß das Vorläuferpulver, das das teilweise mit $Y_2O_3$ stabilisierte Zirkonerdepulver durch thermische Zersetzung bilden kann, ein Copräzipitat ist, das ausgefallen ist aus einer Lösung, enthaltend Zirkoniumverbindung(en) und Yttriumverbindung(en).

**8.** Verfahren nach Anspruch 6, dadurch gekennzeichnet, daß das Sintern unter Atmosphärendruck bei einer Temperatur im Bereich von 1100°C bis 1500°C durchgeführt wird.

**9.** Verfahren nach Anspruch 4, dadurch gekennzeichnet, daß der Sinterkörper ein stabilisierter gesinterter Zirkonerdekörper mit dem folgenden Verhältnis in der Zusammensetzung ist:

teilweise stabilisierte Zirkonerde:          99 bis 40 mol-%

α-Tonerde:                                    1 bis 60 mol-%

Übergangsmetalloxid

mit Ausnahme von $ZrO_2$:                     das Atomverhältnis da-

                                              von zur Kombination von

                                              Zr und Al liegt im Be-

                                              reich von 0,0001 bis

                                              0,01;

das teilweise stabilisierte Zirkonerdepulver, enthaltend-α-Tonerde, aus einem teilweise stabilisiertem Zirkonerdepulver oder dessen Vorläufer mit einer Kristallgröße von 400 Å oder darunter und einer BFT-spezifischen Oberfläche von 2 $m^2$/g oder darüber und einer α-Tonerde oder deren Vorläufer mit einer Kristallteilchengröße von 1,0 $\mu$m oder darunter und einer BET-spezifischen Oberfläche von 2 $m^2$/g oder darüber besteht und das Sintern wird unter Atmosphärendruck bei einer Temperatur im Bereich von 1100°C bis 1500°C durchgeführt wird.

**10.** Sinterkörper aus teilweise mit $Y_2O_3$ stabilisierter Zirkonerde, der gekennzeichnet ist durch einen $Y_2O_3$-Gehalt im Bereich von 1,3 mol-% bis 2,0 mol-%, einem Gehalt an tetragonaler Phase von 65% oder darüber, einer Korngröße von $ZrO_2$ in dem Sinterkörper von 0,5 $\mu$m oder darunter, einer Sinterdichte von 5,8 g/$cm^3$ oder darüber, mindestens einer Art Übergangsmetall, ausgewählt aus der Gruppe bestehend Mn, Fe, Co, Ni, Cu und Zn, und einem Atomverhältnis von Übergangsmetall mit Ausnahme von Zr zu Zr oder zu Zr plus Al von 0,0001 bis 0,01.

**11.** Sinterkörper aus teilweise stabilisierter Zirkonerde, enthaltend α-Tonerde, der gekennzeichnet ist durch das folgende Verhältnis der Zusammensetzung:

teilweise stabilisierte Zirkonerde:          99 bis 40 mol-%

α-Tonerde                                     1 bis 60 mol-%

Übergangsmetalloxid mit Ausnahme von $ZrO_2$,    0,0001 bis 0,01

ausgewählt aus der Gruppe bestehend aus       als Atomverhält-

Mn, Fe, Co, Ni, Cu und Zn:                    nis, bezogen auf

                                              die Kombination

                                              von Zr und Al

wobei die Korngröße der teilweise stabilisierten Zirkonerde 2 $\mu$m oder darunter und die Korngröße der

$\alpha$-Tonerde 4 $\mu$m oder darunter beträgt.

12. Sinterkörper nach Anspruch 11, dadurch gekennzeichnet, daß die teilweise stabilisierte Zirkonerde stabilisiert ist mit $Y_2O_3$, MgO, CaO oder $CeO_2$ und 65% oder mehr tetragonale Phase besitzt.